(19) Europäisches Patentamt
European Patent Office
Office européen des brevets

(11) **EP 4 083 423 A1**

(12) # EUROPEAN PATENT APPLICATION

(43) Date of publication:
**02.11.2022 Bulletin 2022/44**

(21) Application number: **21382369.3**

(22) Date of filing: **28.04.2021**

(51) International Patent Classification (IPC):
***F03D 80/40*** *(2016.01)*

(52) Cooperative Patent Classification (CPC):
**F03D 80/40**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy Innovation & Technology S.L.**
**31621 Sarriguren (Navarra) (ES)**

(72) Inventor: **The designation of the inventor has not yet been filed**

(74) Representative: **SGRE-Association**
**Siemens Gamesa Renewable Energy GmbH & Co KG**
**Schlierseestraße 28**
**81539 München (DE)**

(54) **METHOD AND DEVICE FOR DETERMINING AN ICED CONDITION OF A WIND TURBINE BLADE**

(57)     It is described a method and a device for determining an iced condition of a blade (6) of a wind turbine (1). A target nacelle displacement ($DX_{TABLE}$) along a rotational axis (8) is acquired as a function of at least one predetermined parameter (A) in an ice-free condition of the blade (6); an actual nacelle displacement ($DX_{FILT}$) along the rotational axis (8) is measured by a displacement sensor (9); and the iced condition of the blade (6) is determined if a difference between the target nacelle displacement ($DX_{TABLE}$) and the actual nacelle displacement ($DX_{FILT}$) exceeds a predetermined threshold value.

FIG 2

## Description

Field of invention

The present invention relates to a method and a device for determining an iced condition of a blade of a wind turbine. Ice accretion on wind turbine blades causes power losses as well as an unexpected increase on mechanical loads, which reduces the lifespan of the wind turbine.

There exist several conventional methods for ice detection, based on the different effects of ice accretion on the wind turbine and its operation. US 7 086 834 B1 describes an increase on a mass of blades, which in turn changes their natural frequencies. EP 2 561 221 A1 describes changes on a power curve. US 2012 207 589 A1 describes changes on a surface of the blades, which are detected by changes in the reflecting properties of the surface of the blade. CN 104 180 980 B1 describes changes in aerodynamic properties which are observed in the wind stream.

Summary of the Invention

There may be a need for a method and a device for determining an iced condition of a blade of a wind turbine, which are robust, cost competitive and easy to implement. This need may be met by the subject matters according to the independent claims. The present invention is further developed as set forth in the dependent claims.

According to a first aspect of the invention, a method of determining an iced condition of a blade of a wind turbine is provided. The wind turbine comprises a nacelle and a hub, the hub having the blade and being mounted to the nacelle rotatably about a rotation axis. The method comprises steps of: acquiring a target nacelle displacement along the rotational axis as a function of at least one predetermined parameter in an ice-free condition of the blade; determining an actual nacelle displacement along the rotational axis by means of a displacement sensor; calculating a difference between the target nacelle displacement at an actual value of the at least one predetermined parameter and the actual nacelle displacement; and determining the iced condition of the blade if the difference between the target nacelle displacement and the actual nacelle displacement exceeds a predetermined threshold value.

In an embodiment, the at least one predetermined parameter is selected from a group comprising a power coefficient of the wind turbine, a thrust coefficient of the wind turbine, a pitch angle of the blade, a tip speed ratio of the wind turbine, and a power generated by a generator of the wind turbine.

The power coefficient Cp can be expressed as

$$C_P = \frac{P}{\frac{1}{2}\rho AV^3},$$

wherein P is a power generated by the generator, $\rho$ is an air density, A is an area spanned by the rotating blade, and V is a wind speed.

The thrust coefficient Ct can be expressed as

$$C_T = \frac{T}{\frac{1}{2}\rho AV^2}$$

wherein T is a thrust acting on the nacelle.

The tip speed ratio is a ratio between a tangential speed of a tip of the blade and the wind speed V.

In an embodiment, the displacement sensor is an accelerometer installed in the nacelle, which accelerometer measures an acceleration of the nacelle, and the actual nacelle displacement is determined based on the measured acceleration. In an embodiment, the actual nacelle displacement is determined by filtering the acceleration from the accelerometer. In an embodiment, the accelerometer senses a gravity change due to an inclination of the nacelle, when the nacelle is displaced along the rotational axis, wherein the actual nacelle displacement is calculated based on the sensed gravity change.

In an embodiment, the iced condition of the blade is determined if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement.

In an embodiment, the target nacelle displacement in relation to the actual value of the at least one predetermined parameter is stored in a look-up table.

According to a second aspect of the invention, a device for determining an iced condition of a blade of a wind turbine is provided. The wind turbine comprises a nacelle and a hub, the hub having the blade and being mounted to the nacelle rotatably about a rotation axis. The device comprises an acquiring unit configured to acquire a target nacelle displacement along the rotational axis as a function of at least one predetermined parameter in an ice-free condition of the blade; a first determining unit configured to determine an actual nacelle displacement along the rotational axis by a displacement sensor; a calculating unit configured to calculate a difference between the target nacelle displacement at an actual value of the at least one predetermined parameter and the actual nacelle displacement; and a second determining unit configured to determine the iced condition of the blade if the difference between the target nacelle displacement and the actual nacelle displacement exceeds a predetermined threshold value.

In an embodiment, the at least one predetermined parameter is selected from a group comprising a power coefficient of the wind turbine, a thrust coefficient of the wind turbine, a pitch angle of the blade, a tip speed ratio of the wind turbine, and a power generated by a generator of the wind turbine.

In an embodiment, the displacement sensor is an accelerometer installed in the nacelle, which accelerometer measures an acceleration of the nacelle, and the first determining unit is configured to determine the actual nacelle displacement based on the measured acceleration. In an embodiment, the first determining unit is configured to determine the actual nacelle displacement by filtering the acceleration from the accelerometer. In an embodiment, the accelerometer is configured to sense a gravity change due to an inclination of the nacelle, when the nacelle is displaced along the rotational axis, wherein the first determining unit is configured to determine the actual nacelle displacement based on the sensed gravity change.

In an embodiment, the second determining unit is configured to determine the iced condition of the blade if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement.

In an embodiment, the device further comprises a storing unit storing the target nacelle displacement in relation to the actual value of the at least one predetermined parameter in a look-up table.

Advantageously, the present invention does not require the knowledge of the wind speed, which is usually difficult to measure and not very reliable. The present invention does not require to install or calibrate any sensor which is usually not included in a wind turbine, thereby being robust, cost competitive and easy to implement. The signal treatment tools used by the present invention are standard blocks already used for control purposes. The ice accretion can be detected during the operation of the wind turbine. The detection of the presence of ice on the blades allows to start de-icing mechanisms or to stop the operation of the turbine on time. Thereby, unnecessary loads are avoided, and normal power production levels can be sustained.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1    shows a wind turbine and the different elements thereof; and

Fig. 2    shows a block diagram of a method of determining an iced condition of a blade of a wind turbine according to an embodiment.

Detailed Description

The illustrations in the drawings are schematically. It is noted that in different figures, similar or identical elements are provided with the same reference signs.

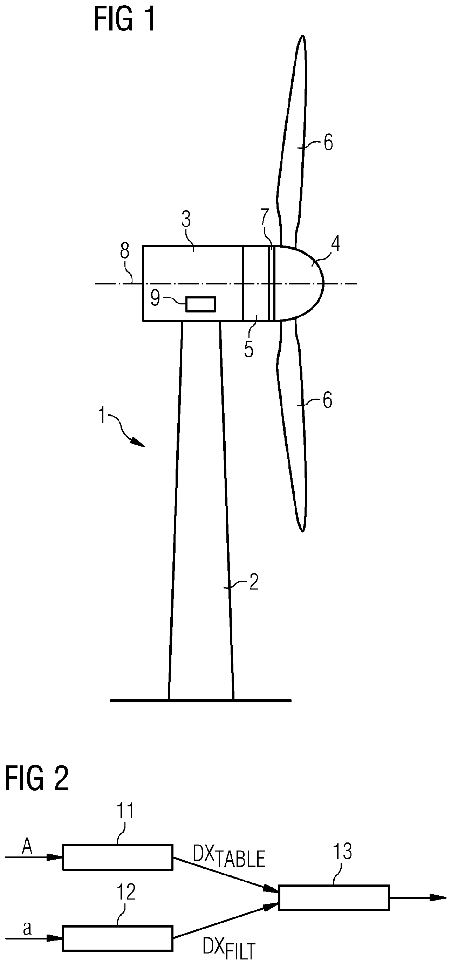

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

**Fig. 2** shows a block diagram of a method of determining an iced condition of the blades 6 of the wind turbine 1 according to an embodiment. The method is carried out by a device (not shown), which can be a local or global control device for controlling the wind turbine 1. The device comprises an acquiring unit 11 which is configured to acquire a target nacelle displacement $DX_{TABLE}$ along the rotational axis 8 as a function of at least one predetermined parameter A in an ice-free condition of the blades 6, and a first determining unit 12 which is configured to determine an actual nacelle displacement $DX_{FILT}$ along the rotational axis 8 by a displacement sensor 9. The device further comprises a calculating unit 13 which is configured to calculate a difference between the target nacelle displacement $DX_{TABLE}$ at an actual value of the at least one predetermined parameter A and the actual nacelle displacement $DX_{FILT}$, and a second determining unit 13 which is configured to determine the iced condition of the blade 6 if the difference between the target nacelle displacement $DX_{TABLE}$ and the actual nacelle displacement $DX_{FILT}$ exceeds a predetermined threshold value. In the present embodiment, the calculating unit 13 and the second determining unit 13 are depicted in the same block for simplification.

The above-mentioned algorithm solves the ice detection problem by comparing two values $DX_{TABLE}$ and $DX_{FILT}$, which should be similar under normal, ice-free operation conditions and which differ under the iced condition of the blades 6. The first value is the estimated, actual nacelle displacement $DX_{FILT}$ along the rotation axis 8, which can be obtained from a raw nacelle acceleration measurement. The second signal is the expected, target nacelle displacement $DX_{TABLE}$ along the rotation axis 8 under normal operation conditions, which can be obtained in advance from power and pitch signals, for example.

The at least one predetermined parameter A can be selected from a group comprising a power coefficient Cp of the wind turbine 1, a thrust coefficient Ct of the wind turbine 1, a pitch angle of the blade 6, a tip speed ratio $\lambda$ of the wind turbine 1, and a power P generated by the generator 5 of the wind turbine 1.

The power coefficient Cp can be expressed as

$$C_P = \frac{P}{\frac{1}{2}\rho AV^3} ,$$

wherein P is the power generated by the generator 5, $\rho$ is an air density, A is an area spanned by the rotating blades 6, and V is a wind speed.

The thrust coefficient Ct can be expressed as

$$C_T = \frac{T}{\frac{1}{2}\rho AV^2} ,$$

wherein T is a thrust acting on the nacelle 3.

The tip speed ratio $\lambda$ is a ratio between a tangential speed of a tip of the blades 6 and the wind speed V.

The estimation of the expected target nacelle displacement $DX_{TABLE}$ can be based on a univocal relation between the thrust coefficient Ct, the pitch angle and the tip speed ratio $\lambda$, which can be represented by Ct-$\lambda$-curves. In turn, the tip speed ratio $\lambda$ depends on a generator speed, whose relationship with the generated power P can be determined as follows: below a rated operation power P, $\lambda$ is proportional to a cube of the generator speed, and above the rated operation power P, both signals are held constant.

Similarly, a proportionality relation can be established between the thrust T acting on the nacelle 3 and the target nacelle displacement $DX_{TABLE}$ which is caused by the thrust T.

All in all, normal operation simulation data can be fitted into a surface which can be represented by a two-dimensional polynomial of second order, in which the pitch angle and the power P are the independent variables and the target nacelle displacement $DX_{TABLE}$ is the dependent variable. The polynomial reflects the expected target nacelle displacement $DX_{TABLE}$ in absence of ice because the used data correspond to the operation under normal conditions for a given pair of pitch angles and power values P.

However, the ice accretion on the blades 6 changes the aerodynamic behaviour of the wind turbine 1. This means that in presence of ice, the relation between the pitch angle, the power P and the thrust T will no longer be equal to that one described by the theoretical Ct-lambda curves or the two-dimensional polynomial. In other words, the target nacelle displacement $DX_{TABLE}$ returned by the polynomial will differ from the actual nacelle displacement $DX_{FILT}$, for example from that value which is a value provided by a filter of the displacement sensor 9.

In the embodiment of Fig. 1, the displacement sensor 9 is an accelerometer installed in the nacelle 3, which accelerometer 9 measures an acceleration a of the nacelle 3. The first determining unit 13 can be configured to determine the actual nacelle displacement $DX_{FILT}$ by filtering the acceleration a from the accelerometer 9. In particular, the accelerometer 9 can be configured to sense a gravity change due to an inclination of the nacelle 3, when the nacelle 3 is displaced along the rotational axis 8, wherein the first determining unit 13 is configured to determine the actual nacelle displacement $DX_{FILT}$ based on the sensed gravity change.

The calculation of the actual nacelle displacement $DX_{FILT}$ can be performed by using the signal provided by the accelerometer 9 installed in the nacelle 3. A filtering process can be applied to the acceleration a. Due to the inclination of the nacelle 3 in the fore-aft movement, the accelerometer 9 can capture the gravity contribution which is essential for the calculation.

Because the relation between the acceleration a and the actual nacelle displacement $DX_{FILT}$ is not affected by external conditions, the actual nacelle displacement $DX_{FILT}$ provided by the filter is close to the real one with independence from the presence of ice.

The second determining unit 13 can be configured to determine the iced condition of the blade 6 if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement. The error threshold parameter $DX_{error}$ determines the detection of ice and can be chosen based on simulation results.

The device according can further comprise a storing unit storing the target nacelle displacement $DX_{TABLE}$ in relation to the actual value of the at least one predetermined parameter A in a look-up table.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. A method of determining an iced condition of a blade (6) of a wind turbine (1), the wind turbine (1) comprising a nacelle (3) and a hub (4), the hub (4) having the blade (6) and being mounted to the nacelle (3) rotatably about a rotation axis (8), the method comprising:

   acquiring a target nacelle displacement ($DX_{TABLE}$) along the rotational axis (8) as a function of at least one predetermined parameter (A) in an ice-free condition of the blade (6);
   determining an actual nacelle displacement ($DX_{FILT}$) along the rotational axis (8) by means of a displacement sensor (9);
   calculating a difference between the target nacelle displacement ($DX_{TABLE}$) at an actual value of the at least one predetermined parameter (A)

and the actual nacelle displacement ($DX_{FILT}$); and
   determining the iced condition of the blade (6) if the difference between the target nacelle displacement ($DX_{TABLE}$) and the actual nacelle displacement ($DX_{FILT}$) exceeds a predetermined threshold value.

2. The method according to the preceding claim, wherein
   the at least one predetermined parameter (A) is selected from a group comprising a power coefficient (Cp) of the wind turbine (1), a thrust coefficient (Ct) of the wind turbine (1), a pitch angle of the blade (6), a tip speed ratio ($\lambda$) of the wind turbine (1), and a power (P) generated by a generator (5) of the wind turbine (1).

3. The method according to any one of the preceding claims, wherein
   the displacement sensor (9) is an accelerometer installed in the nacelle (3), which accelerometer measures an acceleration (a) of the nacelle (3), and the actual nacelle displacement ($DX_{FILT}$) is determined based on the measured acceleration (a).

4. The method according to the preceding claim, wherein
   the actual nacelle displacement ($DX_{FILT}$) is determined by filtering the acceleration (a) from the accelerometer (9).

5. The method according to the preceding claim, wherein
   the accelerometer (9) senses a gravity change due to an inclination of the nacelle (3), when the nacelle (3) is displaced along the rotational axis (8), wherein the actual nacelle displacement ($DX_{FILT}$) is determined based on the sensed gravity change.

6. The method according to any one of the preceding claims, wherein
   the iced condition of the blade (6) is determined if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement.

7. The method according to any one of the preceding claims, wherein
   the target nacelle displacement ($DX_{TABLE}$) in relation to the actual value of the at least one predetermined parameter (A) is stored in a look-up table.

8. A device for determining an iced condition of a blade (6) of a wind turbine (1), the wind turbine (1) comprising a nacelle (3) and a hub (4), the hub (4) having the blade (6) and being mounted to the nacelle (3) rotatably about a rotation axis (8), the device comprising:

an acquiring unit (11) configured to acquire a target nacelle displacement ($DX_{TABLE}$) along the rotational axis (8) as a function of at least one predetermined parameter (A) in an ice-free condition of the blade (6);
a first determining unit (12) configured to determine an actual nacelle displacement ($DX_{FILT}$) along the rotational axis (8) by a displacement sensor (9);
a calculating unit (13) configured to calculate a difference between the target nacelle displacement ($DX_{TABLE}$) at an actual value of the at least one predetermined parameter (A) and the actual nacelle displacement ($DX_{FILT}$); and
a second determining unit (13) configured to determine the iced condition of the blade (6) if the difference between the target nacelle displacement ($DX_{TABLE}$) and the actual nacelle displacement ($DX_{FILT}$) exceeds a predetermined threshold value.

9. The device according to the preceding claim, wherein
the at least one predetermined parameter (A) is selected from a group comprising a power coefficient (Cp) of the wind turbine (1), a thrust coefficient (Ct) of the wind turbine (1), a pitch angle of the blade (6), a tip speed ratio ($\lambda$) of the wind turbine (1), and a power (P) generated by a generator (5) of the wind turbine (1).

10. The device according to any one of claims 8 and 9, wherein
the displacement sensor (9) is an accelerometer installed in the nacelle (3), which accelerometer (9) measures an acceleration (a) of the nacelle (3), and the first determining unit (12) is configured to determine the actual nacelle displacement ($DX_{FILT}$) based on the measured acceleration (a).

11. The device according to the preceding claim, wherein
the first determining unit (13) is configured to determine the actual nacelle displacement ($DX_{FILT}$) by filtering the acceleration (a) from the accelerometer (9).

12. The device according to the preceding claim, wherein

the accelerometer (9) is configured to sense a gravity change due to an inclination of the nacelle (3), when the nacelle (3) is displaced along the rotational axis (8), wherein the first determining unit (13) is configured to determine the actual nacelle displacement ($DX_{FILT}$) based on the sensed gravity change.

13. The device according to any one of claims 8 to 12, wherein
the second determining unit (13) is configured to determine the iced condition of the blade (6) if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement.

14. The device according to any one of claims 8 to 13, further comprising:
a storing unit storing the target nacelle displacement ($DX_{TABLE}$) in relation to the actual value of the at least one predetermined parameter (A) in a look-up table.

# FIG 1

# FIG 2

Europäisches
Patentamt

European
Patent Office

Office européen
des brevets

# EUROPEAN SEARCH REPORT

Application Number

EP 21 38 2369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CASELITZ P ET AL: "Rotor condition monitoring for improved operational safety of offshore wind energy converters", JOURNAL OF SOLAR ENERGY ENGINEERING, ASME INTERNATIONAL, US, vol. 127, no. 2, 1 May 2005 (2005-05-01), pages 253-261, XP008084934, ISSN: 0199-6231, DOI: 10.1115/1.1850485 | 1-4,6,7, 9-11,13, 14 | INV. F03D80/40 |
| A | * the whole document * | 5,12 | |
| A | EP 2 434 146 A1 (SIEMENS AG [DE]) 28 March 2012 (2012-03-28) * claims 1-12; figures 1-3 * | 1,8 | |

TECHNICAL FIELDS
SEARCHED     (IPC)

F03D

The present search report has been drawn up for all claims

| Place of search | Date of completion of the search | Examiner |
|---|---|---|
| The Hague | 12 October 2021 | Król, Marcin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                               
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2369

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2021

| Patent document cited in search report | | Publication date | Patent family member(s) | | Publication date |
|---|---|---|---|---|---|
| EP 2434146 | A1 | 28-03-2012 | CA | 2752930 A1 | 24-03-2012 |
| | | | CN | 102418658 A | 18-04-2012 |
| | | | EP | 2434146 A1 | 28-03-2012 |
| | | | US | 2012076651 A1 | 29-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7086834 B1
- EP 2561221 A1
- US 2012207589 A1
- CN 104180980 B1